# EUROPEAN PATENT APPLICATION

(11) **EP 4 742 384 A1**
(43) Date of publication of application: **13.05.2026**
(21) Application number: 25214066.0
(22) Date of filing: 06.11.2025
(51) Int. Cl.: H01M 50/107, H01M 50/152, H01M 50/169, H01M 50/186, H01M 50/536, H01M 50/545, H01M 50/559

(54) **CELL AND BATTERY HAVING SAME**

(30) Priority: 07.11.2024 CN 202411585437
(71) Applicant: Techtronic Cordless GP, Anderson, SC 29621 (US)
(72) Inventor: HUANG, Xin Yue, Dongguan City (CN); YI, Ding Xing, Dongguan City (CN); HAN, Zhi Qing, Dongguan City (CN); XU, Gang, Dongguan City (CN)
(74) Representative: Meissner Bolte Partnerschaft mbB

(57) **Abstract**

The present invention provides a cell and a battery having the cell. The cell of the present invention includes a housing, a cap assembly and a wound core. The housing is of an elongated configuration and has an opening at a top end, the cap assembly is encapsulated at the opening of the housing and defines a receiving space together with the housing, and the wound core is adaptively shaped to be accommodated in the receiving space. The cap assembly and the wound core are in direct contact and fixedly connected to each other for direct electrical conduction between the wound core and the cap assembly. In the present invention, a conventional busbar between the wound core and the cap assembly is eliminated, thereby saving space. Under the condition of a constant battery length, this arrangement allows the wound core to be lengthened and the capacity to be increased. As the wound core and the cap assembly are directly conductively connected, an electron transport path is shortened, the internal resistance is reduced, and the battery power supply efficiency is increased.

## Description

### Technical Field

The present invention relates to the field of batteries, and in particular to a cell and a battery having the cell.

### Background Art

Currently, a common cell for a battery on the market includes a wound core and a housing, and the wound core is usually placed in the housing to avoid damage to the wound core. The housing is usually composed of a cylinder with an opening on one side and a cap assembly for closing the opening of the cylinder, and when the cap assembly closes the opening of the cylinder, it generally requires a groove for sealing to be engraved in the cylinder, that is, a rolling groove. With fixed battery specifications, a receiving space of the cylinder is constant. The existence of components, such as the cap assembly and the groove, occupies part of the receiving space of the cylinder, and the space that can be occupied by the wound core is smaller than the receiving space of the cylinder, so that the capacity of the cell is limited. In addition, the cell is usually further provided with a busbar, which also occupies part of the receiving space of the cylinder, further reducing the receiving space for the wound core and affecting an increase in the capacity of the cell. At the same time, these structures also cause the processing of the cell to be more complex, increasing the production cost. In addition, there is a demand for low internal resistance batteries on the market, and the safety performance of existing batteries also needs to be improved.

Therefore, there is a need to provide a cell and a battery having the cell, to at least partially solve the above problems.

### Summary

An objective of the present invention is to provide a cell and a battery having the cell. A wound core and a cap assembly of the cell of the present invention are directly fixed by welding to achieve a conductive connection, eliminating a conventional busbar between the wound core and the cap assembly, thereby saving space. Under the condition of a constant battery length, this arrangement allows the wound core to be lengthened and the capacity to be increased. As the wound core and the cap assembly are directly conductively connected, an electron transport path is shortened, the internal resistance is reduced, and the battery power supply efficiency is increased.

Further, the cap assembly of the cell of the present invention has a unique sealing structure at the periphery thereof, which enables a tight engagement between the cap assembly and the housing, thereby effectively improving the stability of the cell during use and extending the service life of the cell. The present invention also provides some preferred arrangements of an explosion-proof valve and an electrolyte filling port, which improve the overall performance of the cell, especially the safety performance, in various aspects.

According to an aspect of the present invention, a cell for a battery is provided, the cell including:
a housing being of an elongated configuration and having an opening at a top end,
a cap assembly encapsulated at the opening of the housing and defining a receiving space together with the housing, and
a wound core adaptively shaped to be accommodated in the receiving space,
where the cap assembly and the wound core are in direct contact and fixedly connected to each other for direct electrical conduction between the wound core and the cap assembly.

In an embodiment, the cap assembly is integrally formed as a flat plate structure, and the entire top surface of the wound core is in surface contact with the cap assembly.

In an embodiment, the cap assembly includes a cap body almost covering the opening, an annular plate surrounding the cap body, and an annular seal ring fitted between the annular plate and the cap body and electrically isolating the annular plate from the cap body,
wherein the wound core is fixedly connected to the cap body, and a side wall of the housing is fixedly connected to the annular plate, in particular the wound core and the cap body are connected to each other by welding, and the side wall of the housing and the annular plate are connected to each other by welding.

In an embodiment, the cap body and the seal ring are provided with mutually matching structures at a junction therebetween, the seal ring and the annular plate are provided with mutually matching structures at a junction therebetween, and the annular plate and the side wall of the housing are provided with mutually matching structures at a junction therebetween.

In an embodiment, a circumferential side of the cap body is provided with a first receiving groove which is open to the outside and extends entirely in a circumferential direction, and at least a portion of the seal ring is disposed in the first receiving groove,
in particular, the seal ring is provided along its entire circumference with a second receiving groove which is open to the outside, and at least a portion of the annular plate is disposed in the second receiving groove, and
preferably, a radially inner end of the annular plate is inserted into the second receiving groove and, together with at least a portion of the seal ring, into the first receiving groove.

In an embodiment, the seal ring has a seal ring top wall, a seal ring bottom wall, and a seal ring side wall connected between the seal ring top wall and the seal ring bottom wall, all of which define the second receiving groove, wherein the seal ring top wall and the seal ring bottom wall both extend radially outwardly beyond the cap body, and preferably the seal ring top wall, the seal ring bottom wall and the seal ring side wall are equal in thickness.

In an embodiment, the annular plate is engaged with the seal ring in an interference fit manner, and/or the seal ring is engaged with the cap body in an interference fit manner.

In particular, each of the annular plate and the cap body is formed as a flat plate of a uniform thickness.

In an embodiment, the side wall of the housing is formed with a first step structure at an open end of the housing, and a second step structure is also provided at a bottom circumferential position of the annular plate, the first step structure and the second step structure being matched in a concave-convex manner, and
preferably, the first step structure includes an outer step and an inner step adjacent to each other in a radial direction, and the outer step protrudes toward the top relative to the inner step.

In an embodiment, the cap assembly is provided with an electrolyte inlet running through the cap body, and the cap assembly also includes an inlet cover plate for covering the electrolyte inlet,
in particular, the wound core and the cap body are welded together along a welding trajectory, the electrolyte inlet is provided to bypass the welding trajectory, and in particular, the welding trajectory is in the form of a radial shape, discrete points, spirals or concentric circles extending along the cap body, and
in particular, the electrolyte inlet is located in the center of the cap body or near an edge of the cap body.

In an embodiment, a thinned area acting as an explosion-proof valve is provided on the housing and/or the cap assembly, preferably a thickness of the thinned area is 40%-90% of a thickness of its adjoining area,
in particular, the side wall of the housing is provided with a circumferentially extending groove as an explosion-proof valve, preferably the groove is located at an axial center of the side wall of the housing, and
in particular, the cap assembly includes an inlet cover plate for covering an electrolyte inlet, and a thickness of the inlet cover plate is less than a thickness of the cap body so that the inlet cover plate functions as an explosion-proof valve.

In an embodiment, a bottom end of the wound core and a bottom wall of the housing are fixedly connected to each other to achieve direct electrical conduction between the bottom wall of the housing and the wound core,
in particular, there is no busbar between a top end of the wound core and the cap assembly, and
in particular, there is no busbar between the bottom end of the wound core and the bottom wall of the housing.

According to another aspect of the present invention, a battery is provided, which includes a cell according to any one of the above solutions, in particular, a plurality of cells are provided and are arranged in an array in a plane perpendicular to an axial direction of the cell.

### Brief Description of the Drawings

To better understand the above and other objectives, features, advantages and functions of the present invention, reference may be made to the preferred embodiments shown in the drawings. In the drawings, identical reference signs denote identical components. It should be understood by a person skilled in the art that the drawings are intended to schematically illustrate the preferred embodiments of the present invention, without imposing any limitations on the scope of the present invention, and that the various components in the drawings are not drawn to scale.
Fig. 1 is a schematic perspective view of a cell according to a preferred embodiment of the present invention;
Fig. 2 is a partial schematic exploded view of Fig. 1, showing a wound core contained within a housing;
Fig. 3 is a schematic exploded view of a cap assembly in Fig. 1;
Fig. 4 is a sectional view of Fig. 1 taken along line A-A; and
Fig. 5 is a partial enlarged view of part B in Fig. 4.

### List of reference numerals:

100 Cell
11 Wound core
111 Through hole
112 Cylindrical body
12 Housing
121 Groove
122 First step structure
1221 Outer step
1222 Inner step
123 Side wall of housing
124 Bottom wall of housing
125 Opening
13 Cap assembly
131 Cap body
1311 First receiving groove
1312 Electrolyte inlet
1313 Welding trajectory
132 Seal ring
1321 Second receiving groove
1322 Seal ring top wall
1323 Seal ring bottom wall
1324 Seal ring side wall
133 Annular plate
1331 Second step structure
1332 Radially inner end of annular plate
134 Inlet cover plate

### Detailed Description of Embodiments

The specific embodiments of the present invention are now described in detail with reference to the drawings. Only preferred embodiments of the present invention are described here, and those skilled in the art could conceive of other ways of realizing the present invention on the basis of these preferred embodiments, such other ways likewise falling within the scope of the present invention.

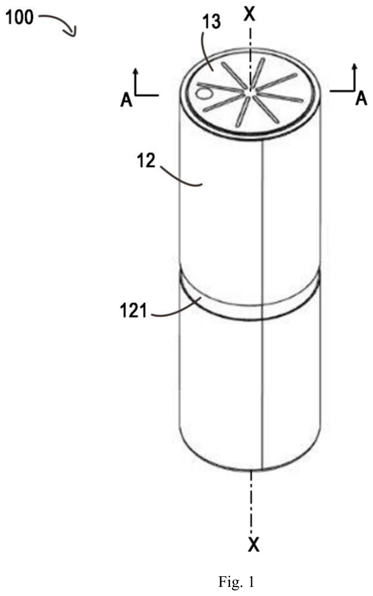

The present invention provides a cell and a battery having the cell. Figs. 1-5 show a cell according to some preferred embodiments of the present invention. It is to be noted first that the terms regarding orientation and position described in the present invention are used only to describe relative orientation and position, rather than the absolute orientation and position, and these orientations and positions can be understood with reference to the placement orientation of the cell shown in Figs. 1-5.

The term "axial direction" or "axial direction" mentioned in the present invention refers to the direction of an axis of a cylindrical cell, for example, as indicated by X in Fig. 1. The cell may also be not cylindrical, and it may be prismatic or cuboid. Accordingly, the term "axial direction" or "direction of axis" may be understood as the direction that extends along the length of the cell and through the center of the cell. The terms "radial direction" and "circumferential direction" mentioned in the present invention are a radial direction and a circumferential direction both in relation to an axial direction X. The term "top side" or "top end" mentioned in the present invention refers to the side of an elongated cell with a cap assembly, and the term "bottom side" or "bottom end" refers to the side of the cell opposite the cap assembly. The terms "top side" and "bottom side" are only relative concepts; for example, even if the cell in Fig. 1 is turned upside down, the side with the cap assembly is still referred to as the top side.

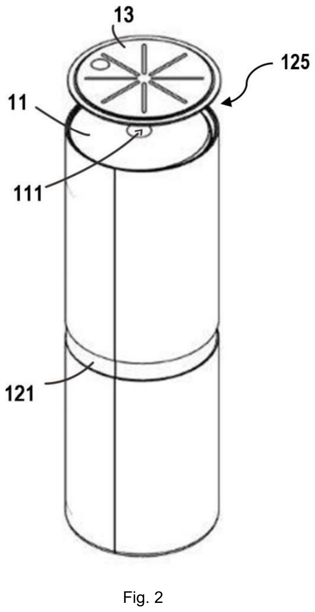

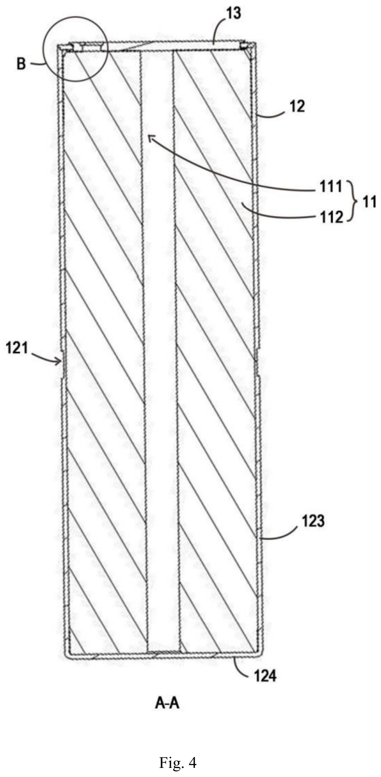

Referring first to Figs. 1 and 2, a cell 100 includes a housing 12, a wound core 11 and a cap assembly 13. The housing 12 is of an elongated configuration and has an opening 125 at a top end, and the cap assembly 13 is encapsulated at the opening 125. In some embodiments, the housing 12 is formed as a generally standard cylinder, while in other embodiments the housing 12 may be a prism or a cube. The wound core 11 is adaptively shaped to be accommodated in the housing 12, and it can be seen from Fig. 2 that an outer diameter of the wound core 11 is approximately equal to an inner diameter of the housing 12, and that a top end of the wound core 11 is approximately flush with a top end of a side wall 123 of the housing 12 (see Fig. 4), that is, the wound core 11 completely fills a receiving space defined by the housing 12 and the cap assembly 13.

The cap assembly 13 and the wound core 11 are fixedly connected to each other directly for direct electrical conduction between the wound core 11 and the cap assembly 13. It should be noted that in the present invention, the phrase "direct contact and fixedly connected to each other" means that the wound core 11 and the cap assembly 13 are directly bonded together without any other primary connection medium or conductive medium therebetween, and that conductive transmission is achieved through direct contact between the wound core 11 and the cap assembly 13. For example, as shown in Fig. 2, the cap assembly 13 is integrally formed as a flat plate structure, the entire top surface of the wound core 11 is in surface contact with the cap assembly 13, and electrical transmission between the wound core 11 and the cap assembly 13 is achieved through such a large area surface contact. The cap assembly 13 with the flat plate structure greatly saves on the space occupied by the cap assembly 13 in an axial direction, helping to increase the capacity of the cell.

In contrast to a conventional configuration in which a busbar is arranged between the wound core 11 and the cap assembly 13, the configuration in which the wound core 11 and the cap assembly 13 of the present invention are in direct contact and in direct electrical transmission can save on space, and therefore, under the condition of a constant battery length, the wound core 11 can be sufficiently lengthened and the capacity can be increased. As the wound core 11 and the cap assembly 13 are directly conductively connected, an electron transport path is shortened, the internal resistance of the cell 100 is reduced, and the battery power supply efficiency is increased.

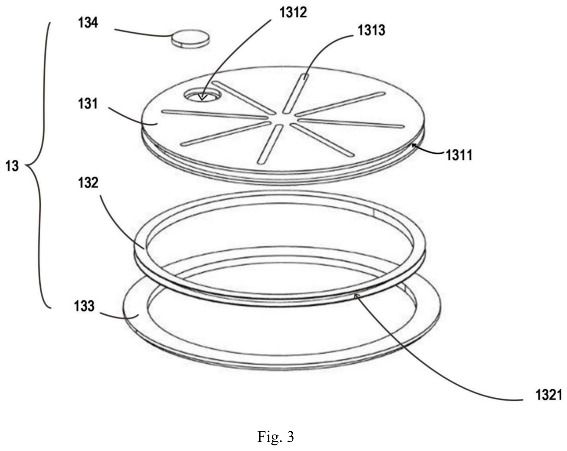

With reference to Fig. 3, the cap assembly 13 includes a circular cap body 131 almost covering the opening 125, an annular plate 133 surrounding the cap body 131, and an annular seal ring 132 fitted between the annular plate 133 and the cap body 131 and electrically isolating the annular plate 133 from the cap body 131. The wound core 11 is fixedly connected to the cap body 131, and the side wall 123 of the housing 12 is fixedly connected to the annular plate 133. The cap body 131 is a flat plate of a uniform thickness, preferably the annular plate 133 is also a flat plate of a uniform thickness, and the thickness of the annular plate 133 is less than the thickness of the cap body 131.

In particular, the wound core 11 and the cap body 131 are connected to each other by means of welding, and the side wall 123 of the housing 12 and the annular plate 133 are connected to each other by means of welding, which is more preferably laser welding. Fig. 3 shows a welding trajectory 1313 for welding the cap body 131 to the wound core 11, the welding trajectory 1313 being of a radial shape (e.g., being radially centered on the center of the circle of the cap body 131) extending entirely along the flat plate structure of the cap body 131. In other embodiments not shown, the welding trajectory may also be in the form of discrete points, spirals or concentric circles. In some other embodiments, the cap assembly 13 may be fixed to the top surface of the wound core 11 by riveting, bonding, etc. The side wall 123 of the housing 12 and the annular plate 133 may also be connected to each other by riveting, bonding, etc.

Further, the seal ring 132 is made of an electrically insulating material, so that in addition to preventing leakage of an electrolyte from the cell 100, it can also function to electrically isolate the cap body 131 from the annular plate 133. In particular, a top end of the cell 100 is in conductive contact with the cap body 131, so that the cap body 131 and the top end of the cell 100 are of the same polarity (e.g., a positive pole) and a bottom end of the cell 100 is in conductive contact with a bottom wall 124 of the housing 12, and the housing 12 is in conductive contact with the annular plate 133, thus the annular plate 133 and the bottom end of the cell 100 are of the same polarity (e.g., a negative pole). The seal ring 132 electrically isolates the cap body 131 from the annular plate 133 to ensure an effective and stable operation of the cell 100 and avoid a short circuit between the positive and negative poles.

In some embodiments, preferred arrangements of a sealing structure between the cap assembly 13 and the housing 12 are also provided, including a preferred arrangement of an engagement structure between the cap body 131 of the cap assembly 13 and the seal ring 132, a preferred arrangement of an engagement structure between the seal ring 132 and the annular plate 133, and a preferred arrangement of an engagement structure between the annular plate 133 and the housing 12. Specifically, the cap body 131 and the seal ring 132 are provided with mutually matching structures at a junction therebetween, the seal ring 132 and the annular plate 133 are also provided with mutually matching structures at a junction therebetween, and the annular plate 133 and the top end of the side wall 123 of the housing 12 are also provided with mutually matching structures. The mutually matching structures can have a variety of embodiments as follows.

In some embodiments, as shown in Figs. 3-5, the side of the cap body 131 is provided with a first receiving groove 1311 which is open to the outside and extends entirely in a circumferential direction, and at least a portion of the seal ring 132 is disposed in the first receiving groove 1311. The seal ring 132 is provided circumferentially entirely with a second receiving groove 1321 which is open to the outside, and at least a portion of the annular plate 133 is disposed in the second receiving groove 1321. The seal ring 132 has a seal ring top wall 1322, a seal ring bottom wall 1323, and a seal ring side wall 1324 connected between the seal ring top wall 1322 and the seal ring bottom wall 1323, the seal ring top wall 1322, the seal ring bottom wall 1323 and the seal ring side wall 1324 defining the second receiving groove 1321 and being equal in thickness. Preferably, the seal ring 132 may be constructed of only the seal ring top wall 1322, the seal ring bottom wall 1323 and the seal ring side wall 1324 without other structures.

Preferably, a radially inner end 1332 of the annular plate 133 is inserted into the second receiving groove 1321 and, together with at least a portion of the seal ring 132, into the first receiving groove 1311, and such an arrangement enables the cap body 131, the seal ring 132 and the annular plate 133 to be in an engagement relationship, so that the structure of the cap assembly is compact and stable. The annular plate 133 is engaged with the seal ring 132 in an interference fit manner, and/or the seal ring 132 is engaged with the cap body 131 in an interference fit manner.

Preferably, the seal ring top wall 1322 and the seal ring bottom wall 1323 extend radially outwardly beyond the cap body 131, and such an arrangement can further ensure electrical insulation between the cap body 131 and the annular plate 133.

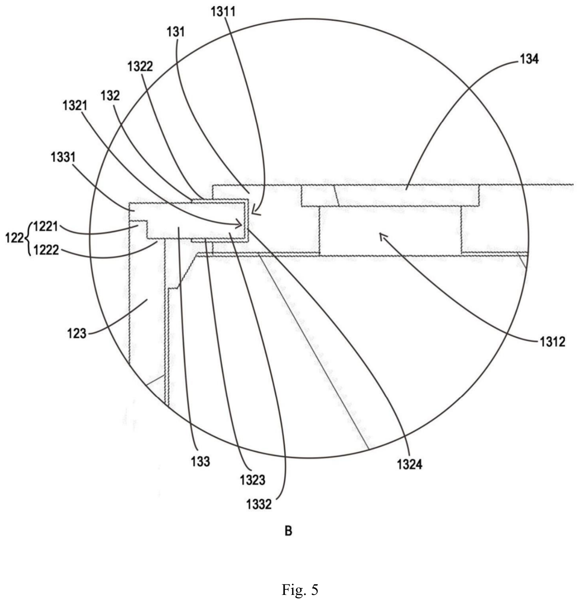

With continued reference to Fig. 5, the side wall 123 of the housing 12 is formed with a first step structure 122 at an open end of the housing 12, and a second step structure 1331 is also provided at a bottom circumferential position of the annular plate 133, the first step structure 122 and the second step structure 1331 being matched in a concave-convex manner. Preferably, the first step structure 122 includes an outer step 1221 and an inner step 1222 adjacent to each other in a radial direction, and the outer step 1221 protrudes toward the top relative to the inner step 1222. Such an arrangement facilitates an assembly between the housing 12 and the annular plate 133.

In addition to the above embodiments, other joint structures may be provided between various components in other embodiments not shown. For example, in an embodiment, the thickness of the annular plate may be greater than the thickness of the cap body, a circumferential inner side of the annular plate may be provided with a receiving groove, and a radially outer end of the cap body may be inserted into the receiving groove together with the seal ring.

With continued reference to Figs. 3-5, the cap assembly 13 is provided with an electrolyte inlet 1312 running through the cap body 131, the cap assembly 13 also includes an inlet cover plate 134 for covering the electrolyte inlet 1312, and the electrolyte inlet 1312 is arranged to bypass the welding trajectory. As shown in Figs. 2 and 4, the wound core 11 includes a cylindrical body 112 and a through hole 111 in the center of the cylindrical body, and the electrolyte can enter the through hole 111 through the electrolyte inlet 1312. In the embodiment shown in the figure, the electrolyte inlet 1312 is disposed near an edge of the cap body 131, but in other preferred embodiments the electrolyte inlet may be disposed at the center of the cap body. A radial dimension of the inlet cover plate 134 is larger than the electrolyte inlet 1312, and a thickness of the inlet cover plate 134 is less than a height of a hole defining the electrolyte inlet 1312.

In order to enhance the safety performance of the cell 100, a thinned area acting as an explosion-proof valve is provided on the housing 12 and/or the cap assembly 13, preferably a thickness of the thinned area is 40%-90% of a thickness of its adjoining area, and when a pressure inside the cell 100 is above a threshold value (the threshold value is, for example, 1.0 MkPa), the pressure can break through the area and be released to prevent an explosion. Referring to Figs. 1 and 4, the side wall 123 of the housing 12 is provided with a circumferentially extending (preferably continuously extending) groove 121 as an explosion-proof valve, and preferably the groove 121 is located at an axial center of the side wall 123 of the housing 12. In addition to or in lieu of this explosion-proof valve, the thickness of the inlet cover plate 134 covering the electrolyte inlet is also less than thickness of the cap body 131, so the inlet cover plate 134 can also be used as an explosion-proof valve.

In some preferred embodiments, direct contact and fixed connection between the bottom end of the cell 100 and the bottom wall 124 of the housing 12 is also possible to achieve a conductive connection therebetween, and a busbar may not be provided between the bottom end of the wound core 11 and the bottom wall 124 of the housing 12. As previously described, the top end of the wound core 11 may be, for example, a positive pole of the wound core 11, and the bottom end of the wound core 11 may be, for example, a negative pole of the wound core 11, so that a positive busbar is omitted between the top end of the wound core 11 and the cap assembly 13, and a negative busbar is omitted between the bottom end of the wound core 11 and the bottom wall 124 of the housing 12.

The materials of the various components in the above embodiments may also have some preferred settings. For example,
the material of the housing 12 includes copper, iron, aluminum, nickel, carbon steel, alloy steel, copper alloy, aluminum alloy, nickel alloy or titanium alloy, preferably carbon steel or alloy steel; the material of the seal ring 132 includes rubber (e.g., natural rubber, chloroprene rubber, nitrile rubber, styrenebutadiene rubber, ethylene-propylene-diene-monomer rubber or fluoroelastomer), engineering plastics (e.g., polytetrafluoroethylene, polyperfluoroethylene propylene, polyvinylidene fluoride or tetrafluoroethylene-perfluoroalkoxy vinyl ether copolymer); the material of the annular plate 133 includes copper, iron, aluminum, nickel, carbon steel, alloy steel, copper alloy, aluminum alloy, nickel alloy or titanium alloy, preferably carbon steel or alloy steel; the material of the cap body 131 includes copper, iron, aluminum, nickel, carbon steel, alloy steel, copper alloy, aluminum alloy, nickel alloy or titanium alloy, preferably carbon steel or alloy steel; and the material of the inlet cover plate 134 includes copper, iron, aluminum, nickel, carbon steel, alloy steel, copper alloy, aluminum alloy, nickel alloy or titanium alloy, preferably carbon steel or alloy steel.

The present invention further provides a battery, which may include one or more cells 100 according to the above embodiments. When a plurality of cells 100 are provided, the plurality of cells 100 can be arranged in an array in a plane perpendicular to an axial direction X. The previous embodiments with respect to the cell 100 should also be regarded as embodiments with respect to the battery.

A wound core and a cap assembly of the cell of the present invention are directly fixed by welding to achieve a conductive connection, eliminating a conventional busbar between the wound core and the cap assembly, thereby saving space. Under the condition of a constant battery length, this arrangement allows the wound core to be lengthened and the capacity to be increased. As the wound core and the cap assembly are directly conductively connected, an electron transport path is shortened, the internal resistance of the cell is reduced, and the battery power supply efficiency is increased. Further, the cap assembly of the cell of the present invention has a unique sealing structure at the periphery thereof, which enables a tight engagement between the cap assembly and the housing, thereby effectively improving the stability of the cell during use and extending the service life of the cell. The present invention also provides some preferred arrangements of an explosion-proof valve and an electrolyte filling port, which improve the overall performance of the cell, especially the safety performance, in various aspects.

The above description of various embodiments of the present invention is provided to a person of ordinary skill in the relevant art for descriptive purposes. The present invention is not intended to be exclusive or limited to a single disclosed embodiment. As described above, various substitutions and variations of the present invention will be apparent to those skilled in the art. Thus, although some alternative embodiments have been specifically described, other embodiments will be apparent or relatively readily developed by those skilled in the art. The present invention is intended to include all substitutes for, alterations to, and variants of the present invention described herein, as well as other embodiments falling within the spirit and scope of the present invention described above.

## Claims

1. A cell (100) for a battery, wherein the cell (100) comprises:
a housing (12) being of an elongated configuration and having an opening (125) at a top end,
a cap assembly (13) encapsulated at the opening (125) of the housing (12) and defining a receiving space together with the housing, and
a wound core (11) adaptively shaped to be accommodated in the receiving space,
wherein the cap assembly (13) and the wound core (12) are in direct contact and fixedly connected to each other for direct electrical conduction between the wound core (11) and the cap assembly (13).

2. The cell as claimed in claim 1, wherein the cap assembly (13) is integrally formed as a flat plate structure, and the entire top surface of the wound core (11) is in surface contact with the cap assembly (13).

3. The cell as claimed in either of claims 1 or 2, wherein the cap assembly (13) comprises a cap body (131) almost covering the opening (125), an annular plate (133) surrounding the cap body, and an annular seal ring (132) fitted between the annular plate (133) and the cap body (131) and electrically isolating the annular plate (133) from the cap body (131),
wherein the wound core (11) is fixedly connected to the cap body (131), and a side wall (123) of the housing (12) is fixedly connected to the annular plate (133), in particular the wound core (11) and the cap body (131) are connected to each other by welding, and the side wall (123) of the housing (12) and the annular plate (133) are connected to each other by welding.

4. The cell as claimed in 3, wherein the cap body (131) and the seal ring (132) are provided with mutually matching structures at a junction therebetween, the seal ring (132) and the annular plate (133) are provided with mutually matching structures at a junction therebetween, and the annular plate (133) and the side wall (123) of the housing (12) are provided with mutually matching structures at a junction therebetween.

5. The cell as claimed in either of claims 3 or 4, wherein a circumferential side of the cap body (131) is formed with a first receiving groove (1311) which is open to the outside and extends entirely in a circumferential direction, and at least a portion of the seal ring (132) is disposed in the first receiving groove (1311),
in particular, the seal ring (132) is provided along its entire circumference with a second receiving groove (1321) which is open to the outside, and at least a portion of the annular plate (133) is disposed in the second receiving groove (1321), and
preferably, a radially inner end (1332) of the annular plate (133) is inserted into the second receiving groove (1321) and, together with at least a portion of the seal ring (132), into the first receiving groove (1311).

6. The cell as claimed in claim 5, wherein the seal ring (132) has a seal ring top wall (1322), a seal ring bottom wall (1323), and a seal ring side wall (1324) connected between the seal ring top wall and the seal ring bottom wall, all of which define the second receiving groove (1321), wherein the seal ring top wall (1322) and the seal ring bottom wall (1323) both extend radially outwardly beyond the cap body (131), preferably the seal ring top wall (1322), the seal ring bottom wall (1323) and the seal ring side wall (1324) are equal in thickness.

7. The cell as claimed in either of claims 5 or 6, wherein the annular plate (133) is engaged with the seal ring (132) in an interference fit manner, and/or the seal ring (132) is engaged with the cap body (131) in an interference fit manner,
in particular, each of the annular plate (133) and the cap body (131) is formed as a flat plate of a uniform thickness.

8. The cell as claimed in any one of claims 3-7, wherein the side wall (123) of the housing (12) is formed with a first step structure (122) at an open end of the housing, and a second step structure (1331) is also provided at a bottom circumferential position of the annular plate (133), the first step structure (122) and the second step structure (1331) being matched in a concave-convex manner, and
preferably, the first step structure (122) comprises an outer step (1221) and an inner step (1222) adjacent to each other in a radial direction, and the outer step (1221) protrudes toward the top relative to the inner step (1222).

9. The cell as claimed in any one of claims 2-8, wherein the cap assembly (13) is formed with an electrolyte inlet (1312) running through the cap body (131), and the cap assembly (13) also comprises an inlet cover plate (134) for covering the electrolyte inlet (1312),
in particular, the wound core (11) and the cap body (131) are welded together along a welding trajectory (1313), the electrolyte inlet (1312) is provided to bypass the welding trajectory (1313), and in particular, the welding trajectory is in the form of a radial shape, discrete points, spirals or concentric circles extending along the cap body, and
in particular, the electrolyte inlet (1312) is located in the center of the cap body (131) or near an edge of the cap body.

10. The cell as claimed in any one of claims 3-9, wherein a thinned area acting as an explosion-proof valve is provided on the housing (12) and/or the cap assembly (13), preferably a thickness of the thinned area is 40%-90% of a thickness of its adjoining area,
in particular, the side wall (123) of the housing (12) is formed with a circumferentially extending groove (121) as an explosion-proof valve, preferably the groove (121) is located at an axial center of the side wall (123) of the housing (12), and
in particular, the cap assembly (13) comprises an inlet cover plate (134) for covering an electrolyte inlet (1312), and a thickness of the inlet cover plate (134) is less than a thickness of the cap body (131) so that the inlet cover plate (134) functions as an explosion-proof valve.

11. The cell as claimed in any one of claims 1-10, wherein a bottom end of the wound core (11) and a bottom wall (124) of the housing (12) are fixedly connected to each other to achieve direct electrical conduction between the bottom wall (124) of the housing (12) and the wound core (11),
in particular, there is no busbar between a top end of the wound core (11) and the cap assembly (13), and
in particular, there is no busbar between the bottom end of the wound core (11) and the bottom wall (124) of the housing (12).

12. A battery, wherein the battery comprises a cell (100) according to any one of claims 1-11, in particular, a plurality of cells are provided and are arranged in an array in a plane perpendicular to an axial direction (X) of the cell.
